# EUROPÄISCHE PATENTSCHRIFT

(11) **EP 3 447 476 B1**
(45) Veröffentlichungstag und Bekanntmachung des Hinweises auf die Patenterteilung: **12.10.2022**
(21) Anmeldenummer: 17188019.8
(22) Anmeldetag: 25.08.2017
(51) Int. Cl.: G01N 21/3554, G01N 21/47, G01N 21/552, G01N 21/55

(54) **VERFAHREN ZUR BESTIMMUNG DER OBERFLÄCHENFEUCHTIGKEIT UND MESSEINRICHTUNG FÜR DAS VERFAHREN**
METHOD TO DETERMINE SURFACE MOISTURE AND MEASURING DEVICE FOR THE METHOD
PROCÉDÉ DE DÉTERMINATION DE L'HUMIDITÉ SUPERFICIELLE ET DISPOSITIF DE MESURE POUR LE PROCÉDÉ

(43) Veröffentlichungstag der Anmeldung: 27.02.2019
(73) Patentinhaber: DAW SE, 64372 Ober-Ramstadt (DE)
(72) Erfinder: KRAMBERGER, Helge, 64297 Darmstadt (DE); BISHARA, Ayman, 01069 Dresden (DE); SEIBEL, Michael, 64646 Heppenheim (DE); EBERHARDT, Bernd, 64807 Dieburg (DE)
(74) Vertreter: Metten, Karl-Heinz

(56) Entgegenhaltungen:
- WO-A1-2015/060910
- GB-A- 1 404 573
- US-A1- 2012 140 233

## Beschreibung

Die vorliegende Erfindung betrifft ein Verfahren zur Messung und/oder Beobachtung der Feuchtigkeit an einer Oberfläche, insbesondere von Gebäudefassaden oder Bauwerken. Die Erfindung betrifft ferner eine Messeinrichtung für die Bestimmung der Oberflächenfeuchtigkeit an Gebäudefassaden.

Aus dem Stand der Technik ist bekannt, dass Gebäudefassaden feucht werden. Häufig ist dies auf die Kondensation von Feuchtigkeit zurückzuführen. Es kann aber auch durch ein Regenereignis verursacht werden. Mit der Feuchtigkeit gehen verschiedene Probleme einher; unter anderem können Fassadenschäden auftreten oder es droht der Befall mit Mikroorganismen, Algen und/oder Schimmel. Dies ist insbesondere dann der Fall, wenn die Wärmedämmung der Fassade sehr gut ist, so dass die Erwärmung des Gebäudes im Innenbereich nicht zu einer signifikanten Erwärmung der Fassade führt. Eine signifikante Erwärmung der Fassade führt zum schnelleren Abtrocknen der Fassade und somit zum Abwehr besagter Gefahren wie z.B. dem Wassereintrag in das Fassadensystem. Um die Randbedingungen, die zu Problemen an der Fassade führen, besser einschätzen zu können, ist es hilfreich, Informationen über die Umgebung der Algen oder des Schimmels zu erhalten. Dies betrifft beispielsweise die Feuchtigkeit, den Aufbau der Fassade und die Temperatur.

Aus dem Stand der Technik sind Verfahren bekannt, die Eigenschaften von Fassaden messen, welche grundsätzlich einen Einfluss auf den Algen- oder Schimmelbefall haben können.

Die US 2012/140233 A1 betrifft eine Vorrichtung zum Nachweis von Feuchtigkeit, Flüssigkeit, Eis, Dampf oder schweren Gasen auf einer Oberfläche. Ein solche Vorrichtung umfasst eine Quelle zum Beleuchten einer Oberfläche mit mindestens einer Lichtwellenlänge, einen Detektor zum Empfangen der von der Oberfläche zurückgeworfenen Beleuchtung und zum Bereitstellen eines analogen Signals, das für die zurückgeworfene Beleuchtung repräsentativ ist, und eine Steuerung, die das analoge Signal abtastet, um Abtastdaten zu erhalten, die für die Amplitude des von der Oberfläche durch den Detektor zurückgeworfenen Lichts der Quelle repräsentativ sind, und wobei die Steuerung das Vorhandensein von Feuchtigkeit, Flüssigkeit, Eis, Dampf oder schweren Gasen auf der Oberfläche in Übereinstimmung mit den Abtastdaten bestimmt. Ein solche Vorrichtung umfasst ferner ein Gehäuse, das in einer Wohnung oder einem Gebäude angebracht werden kann, und das die Quelle, den Detektor und die Steuerung aufweist. Hierbei befindet sich das Gehäuse in einem Abstand von der Oberfläche, wobei die Beleuchtung von der Quelle aus dem Gehäuse entlang einer ersten Richtung projiziert wird, um einen ersten Bereich entlang der Oberfläche zu beleuchten. Der Detektor empfängt an dem Gehäuse entlang einer zweiten Richtung von einem zweiten Bereich entlang der Oberfläche zurückkehrende Strahlung, wobei der erste Bereich und der zweite Bereich entlang der Oberfläche gleich sind oder sich im Wesentlichen überlappen. Ferner ist der Detektor betreibbar, um das analoge Signal zu liefern, das es der Steuerung ermöglicht, die Probendaten zur Verwendung bei der Bestimmung des Vorhandenseins von Feuchtigkeit, Flüssigkeit, Eis, Dampf oder schweren Gasen auf der Oberfläche zu erhalten, wenn die erste Richtung und die zweite Richtung jeweils senkrecht in Bezug auf die Oberfläche sind und wenn die erste Richtung und die zweite Richtung jeweils nicht senkrecht in Bezug auf die Oberfläche sind. Mit einer solchen Vorrichtung soll die optische Erkennung von Wasser auf einer entfernten Oberfläche möglich sein.

Die GB 1 404 573 A offenbart ein Verfahren zur Bestimmung der auf der Oberfläche einer lithographischen Druckplatte vorhandenen Flüssigkeitsmenge. Ein solches Verfahren umfasst das Ausrichten der Strahlung einer Strahlungsquelle auf einen Detektor mittels eines Standardmediums, das den Anteil der den Detektor erreichenden Strahlung bestimmt, um ein erstes Signal zu erzeugen, das die Menge der den Detektor mittels des Standardmediums erreichenden Strahlung darstellt. Weiterhin umfasst das Verfahren das Ausrichten von Strahlung von der Quelle unter einem gegebenen Einfallswinkel auf die Oberfläche, so dass die Strahlung von der Oberfläche zum Detektor reflektiert wird, um ein zweites Signal zu erzeugen, das die Menge der von der Oberfläche reflektierten Strahlung darstellt. Hierbei liegt dieser Winkel in einem Bereich, in dem das Reflexionsvermögen der Platte im Wesentlichen unabhängig von diesem Winkel ist. Ferner wird ein Vergleich der durch das erste und das zweite Signal dargestellten Mengen durchgeführt, um ein Maß für das Reflexionsvermögen der Oberfläche und damit für die auf der Oberfläche vorhandene Flüssigkeitsmenge zu erhalten. Hierbei soll das Reflexionsvermögen für die Strahlung bei dem gegebenen Winkel von der optischen Oberflächenrauheit abhängen, welche sich mit der Oberflächenfeuchtigkeit ändert. Mit einem solchen Verfahren soll es möglich sein, Flüssigkeiten auf Oberflächen von lithographischen Druckplatten zu detektieren.

Die WO 2015/060910 A1 befasst sich mit einem System zur Detektion von Eis und/oder Wasser in einem interessierenden Bereich, wobei das System ein Detektionssystem und eine Verarbeitungseinheit umfasst. Das Detektionssystem misst die Strahlung oder Reflexion des interessierenden Bereichs in einer spezifischen Weise unter Ausgabe eines ersten und eines zweiten Bandsignals. Die Verarbeitungseinheit bestimmt sodann das Verhältnis des ersten Bandsignals und des zweiten Bandsignals. Hierbei vergleicht die Verarbeitungseinheit das ermittelte Verhältnis mit vorbestimmten kritischen Verhältnisbereichen und gibt ein Bestimmungssignal aus, das das Vorhandensein von Eis anzeigt, wenn das Verhältnis innerhalb eines ersten Bereichs der vorbestimmten kritischen Verhältnisbereiche liegt, und/oder das das Vorhandensein von Wasser anzeigt, wenn das Verhältnis innerhalb eines zweiten Bereichs der vorbestimmten kritischen Verhältnisbereiche liegt. Mit diesem optischen System sollen sich Eis und Wasser auf einer Vielzahl von Oberflächen feststellen lassen. Auch sollen unterkühlte Wassertröpfchen erkennbar sein, die beim Auftreffen auf die Oberflächen von Luftfahrzeugen gefrieren. Die DE 37 24 160 A1 offenbart Verfahren zur Prüfung der Wasserdurchlässigkeit von Außenwänden und anderweitigen Bauwerksbedingungen und/oder der schlechten Durchlüftung von Wohn- oder gewerblich genutzten Räumen, wobei an der Außenwand, raumseits, die Oberflächentemperatur gemessen und zusammen mit den sich aus der Außen- und Raumtemperatur theoretisch ergebenden Werten die Verdunstungskälte oder Kondensationswärme in bzw. an der Wand bestimmt wird.

In der DE 195 20 035 C1 ist die berührungslose Messung der Feuchte von Objekten auf der Basis eines Filterdifferenzverfahrens offenbart. Durch die Verwendung eines abbildenden infrarot-empfindlichen Aufnahmesystems gelingt eine flächenhafte Bestimmung der Feuchte auf an sich beliebigen Objektoberflächen, auch hinter einer Folienschicht oder IRtransparenten Medien, mittels indirekter Sondierung. Hierbei wir die Absorption von IR-Strahlung durch Wasser genutzt, um ein Bild der Wassermenge zu erhalten.

Die DE102007049285 A1 offenbart einen lichtoptischen Feuchte-Sensor, wobei eine Lichtquelle und ein Lichtempfänger in einer kompakten, robusten Sensoreinheit mit wasserdurchlässiger Hülle im Baukörper bei der Errichtung verbaut bzw. in das Volumen eines bestehenden Bauteils eingebracht wird und der langzeitlichen, wartungsfreien Feuchtemessung am positionierten Ort ohne nachteiligen Einfluss von gelösten Salzen und Temperatur Schwankungen dient.

Die DE 197 52 572 A1 betrifft Verfahren zum berührungslosen Prüfen von Betonkonstruktionen wie Brücken- und Tunnelbauwerken auf Fehler, beispielsweise auf Hohlräume in Spannbetonkabeln, Hohlräume hinter Tunnelwandungen, Feuchtigkeit innerhalb des Betons oder dergleichen, durch Einsatz von Infrarotstrahlung, wobei das Messen und die Fehlerbestimmung durch Reflexionsänderungen von auf die Oberfläche auftreffenden gepulsten Energiestrahlen einer Energiequelle durchgeführt wird. Hierbei wird die Oberfläche mit einer Kamera abgetastet, wobei das zurückgeworfene Signal analysiert wird. Verändert sich das Signal, kann auch Unregelmäßigkeiten unterhalb der Oberfläche zurückgeschlossen werden. Eine Untersuchung der Oberfläche ist hingegen nicht Gegenstand der DE 197 52 572.

Die DE 40 40 101 A1 offenbart ein Materialfeuchtemessverfahren, wobei ein von einer ersten Quelle für elektromagnetische Strahlung bekannter Leistung ausgehender Aufheizstrahl auf einen Messfleck an der Probenoberfläche des zu untersuchenden Festkörpers während einer vorgegebenen Zeitspanne gerichtet und dabei ein definiertes Wärmeenergiequantum vom Festkörper absorbiert wird, so dass sich erwärmungsbedingt in der an den Messfleckbereich angrenzenden Atmosphäre eine Dampfblase ausbildet und wobei mit einem von einer zweiten Quelle für elektromagnetische Strahlung bekannter Leistung ausgehenden Messstrahl, der wenigstens auf einer Teillänge angenähert parallel zur Probenoberfläche geführt wird, die Dampfblase durchstrahlt und der aus der Dampfblase austretende Messstrahl auf einen Sensor geworfen wird, wobei die mit dem Sensor gemessene Restintensität des beim Durchdringen der Dampfblase geschwächten Messstrahls ein Maß für die Dampfdichte und damit für den Feuchtegehalt des untersuchten Körpers ist.

Es wurde festgestellt, dass die bisher bekannten Verfahren und Messeinrichtungen nicht in hinreichendem Maße geeignet sind, die Oberflächenfeuchtigkeit trotz der unvermeidbaren Störfaktoren genau zu bestimmen. Oftmals wird auch nur die Feuchtigkeit innerhalb des Materials gemessen und nicht an der Oberfläche. Obgleich auch Feuchtigkeit innerhalb der Fassade auftreten kann, ist für die vorstehend genannte Gefahr des Befalls mit Mikroorganismen, Algen oder Schimmel maßgeblich, wie viel Feuchtigkeit außen an der Oberfläche der Fassade adsorbiert ist. Nur an der Oberfläche finden Mikroorganismen, Algen oder Schimmel im Regelfall geeignete lebensnotwendige Bedingungen vor.

Aus dem Stand der Technik sind Verfahren bekannt, bei welchen die Feuchtigkeit der Oberfläche bestimmt wird, indem mittels eines saugfähigen Gewebes, dessen Trockengewicht bekannt ist, das Oberflächenwasser abgenommen wird. Anschließend wird der Gewichtszuwachs gemessen, um die Menge an Feuchtigkeit zu ermitteln. Das Verfahren ist aufwendig und wenig präzise und kann zu einer Veränderung der Oberflächenstruktur führen.

Es besteht daher ein Bedarf an einem Messverfahren, mit welchen die Feuchtigkeit an Oberflächen von Gebäudefassaden einfach, kontaktlos und zuverlässig, d.h. reproduzierbar und ohne mechanische Beeinträchtigung der Oberfläche bestimmt werden kann. Ein Problem bei solchen Messungen ist, dass Sensoren durch Sonnenlicht oder Wetterbedingungen negativ beeinträchtigt werden können. Ferner kann die Rauigkeit der Oberfläche das Signal verfälschen.

Die Aufgabe der Erfindung war es, die vorstehend genannten Nachteile des Stands der Technik zu überwinden und ein Verfahren zur Messung und/oder Beobachtung der Oberflächenfeuchtigkeit sowie eine zugehörige einfach einzusetzende Messeinrichtung bereitzustellen. Ferner ist es eine Aufgabe der Erfindung, ein Verfahren und eine Messeinrichtung bereitzustellen, mit welchem sich im Außeneinsatz beobachten lässt, wie sich die Feuchtigkeit einer Oberfläche unter Umweltbedingungen verändert, insbesondere in Abhängigkeit von Klima und Wetter.

Die Aufgabe wird gelöst durch ein Verfahren zur, insbesondere kontaktlosen, Messung und/oder Beobachtung der Oberflächenfeuchtigkeit von Gebäudefassaden in einem Oberflächenbereich, wobei das Verfahren folgende Schritte umfasst:
a) Anordnung einer an der Tragevorrichtung befestigten Lichtquelle, insbesondere einer Infrarot-Lichtquelle, beabstandet von der Oberfläche, so dass der Strahlengang eines einfallenden Lichtstrahls, der durch die Lichtquelle erzeugt wird, unter einem Einfallswinkel α auf den Oberflächenbereich trifft, insbesondere unter Einsatz der Messeinrichtung, wie sie nachstehend beschrieben wird,
b) Reflexion des einfallenden Lichtstrahls an Wasser, welches an dem Oberflächenbereich haftet, unter einem Reflexionswinkel β, so dass der Strahlengang eines reflektierten Lichtstrahls mit einer Lichtintensität, insbesondere einem Reflexionsgrad, ausgebildet wird,
c) Detektion des reflektierten Lichtstrahls durch einen an der Tragevorrichtung befestigten Lichtsensor, welcher im Strahlengang des reflektierten Lichtstrahls angeordnet ist,
d) Auswertung des Ausgabesignals des Lichtsensors, insbesondere durch eine Datenverarbeitungseinrichtung, wobei der Lichtintensität, insbesondere dem Reflexionsgrad, des reflektierten Lichtstrahls eine Oberflächenfeuchtigkeit, insbesondere quantitativ, zugeordnet wird, insbesondere wobei einer höheren Lichtintensität und/oder einem höheren Reflexionsgrad eine höhere Oberflächenfeuchtigkeit und einer niedrigeren Lichtintensität und/oder einem niedrigeren Reflexionsgrad eine niedrigere Feuchtigkeit zuzuordnen ist, und
   wobei die Änderung der Oberflächenfeuchtigkeit über eine Änderung der Lichtintensität, insbesondere des Reflexionsgrades, des reflektierten Lichtstrahls, insbesondere qualitativ, verfolgt wird, insbesondere wobei einer höheren Lichtintensität und/oder einem höheren Reflexionsgrad eine höhere Oberflächenfeuchtigkeit und einer niedrigeren Lichtintensität und/oder einem niedrigeren Reflexionsgrad eine niedrigere Feuchtigkeit zuzuordnen ist,
   wobei der Reflexionswinkel β dem Einfallswinkel α entspricht oder die Abweichung des Reflexionswinkels β von dem Einfallswinkel α nicht mehr als 15° beträgt,
   wobei der Reflexionswinkel β und der Einfallswinkel α größer als 48,6° sind,
   wobei die Lichtquelle eine Pulslichtquelle mit einer Pulsfrequenz von 10 kHz bis 70 kHz ist und der Lichtsensor und eine mit dem Lichtsensor verbundene Datenverarbeitungseinrichtung das Pulssignal von kontinuierlichen Störsignalen trennt,
   wobei die Lichtquelle eine Strahlung im Wellenbereich von 820 nm bis 1,5 µm abgibt,
   wobei der Lichtsensor eine Photodiodenzeile umfasst und/oder der Lichtsensor durch mehrere Photodioden auf einem Chip zusammen mit Integrations- und Ausleseschaltung ausgebildet ist,
   wobei der Lichtsensor mindestens einen optischen Filter umfasst, um Tageslicht und/oder sichtbares Licht im Wesentlichen vollständig oder überwiegend herauszufiltern, und/oder wobei der Lichtsensor auf den Wellenlängenbereich der Lichtquelle abgestimmt ist und
   wobei der Abstand auf und/oder in der Tragevorrichtung zwischen Lichtquelle und Lichtsensor 20 bis 60 cm beträgt.

Es hat sich gezeigt, dass mithilfe des vorstehend beschriebenen Verfahrens die Oberflächenfeuchtigkeit über die Menge an reflektiertem Licht bestimmt und verfolgt werden kann, insbesondere der Bedeckungsgrad der Oberfläche mit Wasser. Es wird dabei nicht die Absorption von Licht durch die Wassermoleküle bestimmt, sondern die reflektierende Eigenschaft der Grenzfläche von Wasser zur Luft zur Messung verwendet. Hierbei wird die Reflexion genutzt, um Rückschlüsse auf die Menge an Wasser zu erlauben. Dies bedeutet auch, dass Bereiche, die mit viel Wasser vollständig bedeckt sind, ähnliche Eigenschaften haben können, wie Bereiche, die mit wenig Wasser vollständig bedeckt sind. Für die Menge an reflektiertem Licht kommt es vorrangig darauf an, wie viel der Oberfläche mit Wasser bedeckt ist und nicht so sehr wie hoch das Wasser steht, wobei ein höherer Bedeckungsgrad mit einem mehr reflektierten Licht einhergeht. Gleichwohl ist eine Bestimmung der Menge an Wasser denkbar, solange das Wasser nicht zu hoch auf der Oberfläche steht. Denn zwischen Bedeckungsgrad und der Menge an Wasser besteht üblicherweise eine Korrelation. Es hat sich gezeigt, dass mit dem vorstehend beschriebenen Verfahren besonders zuverlässig die Oberflächenfeuchtigkeit auch von rauen Oberflächen bestimmt werden kann. Herkömmlich Verfahren nutzten andere Techniken, beispielsweise Absorptionsmessungen mit Licht. Dennoch ist das Ergebnis einer solchen Messung überraschenderweise zuverlässiger als eine herkömmliche Lichtabsorptionsmessung oder Wärmebildmessung von Wasser mit Infrarotstrahlung - zumindest was die Bestimmung der Feuchtigkeit an der Oberfläche betrifft. Die Oberflächenfeuchtigkeit im Sinne der vorliegenden Erfindung ist vorzugsweise ein Maß für die Menge an Wasser an der Oberfläche und/oder den Bedeckungsgrad der Oberfläche mit Wasser.

In Schritt d) ist die Auswertung des Ausgabesignals des Lichtsensors, wobei der Lichtintensität des reflektierten Lichtstrahls und/oder dem Reflexionsgrad eine Oberflächenfeuchtigkeit, insbesondere durch eine Datenverarbeitungseinrichtung, zugeordnet wird, möglich. Vorzugsweise erfolgt diese Auswertung, indem ein in Schritt c) bestimmter Messwert des Lichtsensors mit mindestens einem bestimmten Referenzwert abgeglichen wird. Die Referenzwerte können auf verschiedene Arten bestimmt werden, beispielsweise durch gezieltes und kontrolliertes Befeuchten einer Wand durch den Anbieter des Verfahrens in eigenen Versuchen auf dem Werksgelände oder durch gezieltes und kontrolliertes Befeuchten der zu vermessenden Wand durch den Nutzer vor Ort. Auch eine Parallelbestimmung mit herkömmlichen Verfahren zu Referenzwertermittlung ist denkbar. Hierbei wird ein Messwert der Lichtintensität des reflektierten Lichts und/oder der Reflexionsgrad gemessen und die zugehörige anderweitig bestimmte oder durch die kontrollierte Aufbringung bekannte Oberflächenfeuchtigkeit mit dem Messwert korreliert. Mehrfachmessungen zur Fehlerreduzierung sind denkbar. Der Messwert und die zugehörige Oberflächenfeuchtigkeit stellen einen Referenzwert dar, wobei weitere Referenzwerte in analoger Weise bestimmt werden können. Über besagte Referenzwerte kann die Oberflächenfeuchtigkeit, insbesondere die Menge an Wasser und/oder der Bedeckungsgrad mit Wasser, mit den Messwerten des Lichtsensors quantitativ bestimmt werden.

In Schritt d) ist alternativ oder zusätzlich vorgesehen, dass eine Änderung der Oberflächenfeuchtigkeit über eine Änderung der Lichtintensität des reflektierten Lichtstrahls und/oder des Reflexionsgrades beobachtet, insbesondere verfolgt, wird. Auch hier ist es möglich, wie vorstehend beschrieben, die Oberflächenfeuchtigkeit quantitativ zu bestimmen. Allerdings ist es auch denkbar, die zeitliche Änderung der Oberflächenfeuchtigkeit über die Lichtintensität des reflektierten Lichtstrahls und/oder über den Reflexionsgrad ohne quantitative Bestimmung qualitativ zu verfolgen. Eine höhere Lichtintensität des reflektierten Lichtstrahls geht regelmäßig mit einer höheren Oberflächenfeuchtigkeit einher und eine niedriger Lichtintensität des reflektierten Lichtstrahls mit einer niedrigeren Oberflächenfeuchtigkeit. Demgemäß kann die relative Änderung der Oberflächenfeuchtigkeit qualitativ beobachtet und verfolgt werden, ohne dass die Menge an Wasser an der Oberfläche und/oder der Bedeckungsgrad der Oberfläche mit Wasser quantitativ bestimmt werden. Optional kann eine qualitative Messung zusätzlich erfolgen. Oftmals sind derartige qualitative Bestimmungen für Anwendungen wichtig, bei welchen bekannt sein muss, wie häufig und zu welchen Zeitpunkten eine Oberfläche mit Oberflächenfeuchtigkeit belastet ist. In diesem Fall ist es beispielsweise denkbar, zu einem Zeitpunkt, zu welchem die Belastung hoch ist, ein Biozid aufzubringen. Für eine solche qualitative Anwendung sind Referenzwerte und eine quantitative Messung entbehrlich.

Vorzugsweise ist eine Messung im Sinne der vorliegenden Erfindung eine quantitative und/oder qualitative Messung, wie sie vorstehend beschrieben wurde, und eine Beobachtung im Sinne der vorliegenden Erfindung eine qualitative und/oder quantitative Verfolgung der zeitlichen Änderung der Oberflächenfeuchtigkeit über eine zeitlich begrenzt andauernde Aufzeichnung der Messwerte des Sensors, insbesondere In Form von Einzelmessungen in regelmäßigen Zeitabständen.

Die Lichtintensität des reflektierten Lichtstrahls kann sich auf den gesamten spektralen Wellenbereich des Lichts beziehen. Vorzugsweise ist jedoch die Lichtintensität im Sinne der Erfindung, die Intensität des Lichtstrahls, die vom Lichtsensor erfasst wird. Wird beispielsweise ein Infrarotfilter, der nur infrarotes Licht durchlässt, verwendet, bezieht sich Lichtintensität vorzugsweise auch nur auf dieses tatsächlich erfasste Licht. Selbiges gilt, falls der Sensor nur bestimmte Wellenlängen detektieren kann.

Vorzugsweise nutzt die Datenverarbeitungseinrichtung und/oder der Filter die Pulsfrequenz, um das Pulssignal von kontinuierlichen Signalen, insbesondere Tageslicht, mittels eines elektronischen Filters zu trennen. Es hat sich gezeigt, dass das kontinuierliche Sonnenlicht die Messung weniger stört, wenn zur Messung Pulslichtquellen mit einer Pulsfrequenz von10 kHz bis 70 kHz verwendet werden, um das Signal der Reflexion vom Sonnenlicht zu unterscheiden. Pulstechniken werden gelegentlich auch zum Abtasten von Oberflächen eingesetzt, was für die vorliegende Erfindung nur ein Nebenaspekt ist. In einer Ausgestaltung wird keine Oberfläche abgetastet, sondern das Pulssignal trifft immer auf denselben Oberflächenbereich, d.h. die Ausrichtung der Lichtquelle ist fixiert und ändert sich nicht. Auch wird der Oberflächenbereich durch eine Pulslichtquelle weniger erwärmt.

Vorzugsweise gibt die Lichtquelle überwiegend eine Strahlung im Wellenbereich von 840 nm bis 1,2 µm ab. Infrarotstrahlung hat sich überraschenderweise als besonders geeignet für Wasser erwiesen.

In einer Ausgestaltung des Verfahrens ist es vorgesehen, dass in einem Schritt e1) und/oder e2), der nach dem Schritt d) erfolgt, wobei Schritt e1) und/oder e2) folgendermaßen lautet e1) vorzugsweise Nutzung von Ergebnissen der Auswertung des Ausgabesignals nach Schritt d) zur Bestimmung des Zeitpunkts und/oder der Menge der Aufbringung eines Biozids auf den Oberflächenbereich und/oder die Oberfläche, e2) vorzugsweise Nutzung von Ergebnissen der Auswertung des Ausgabesignals nach Schritt d) zur Bestimmung von baulichen Maßnahmen, insbesondere der Veränderung der Oberfläche, vorzugsweise durch Aufbringung einer Beschichtung und/oder einem Material.

Bei der Beschichtung kann es sich beispielsweise um eine Farbe mit wasserabweisender Wirkung handeln. Bei dem Material kann es sich beispielsweise um ein Dämmmaterial handeln.

In einer zweckmäßigen Ausgestaltung der Erfindung ist die Lichtquelle eine Infrarotlichtquelle und der Lichtsensor umfasst mindestens einen optischen Filter, um Tageslicht im Wesentlichen vollständig oder überwiegend herauszufiltern. In einer Ausführungsform handelt es sich um einen Tageslicht-Sperrfilter, d.h. einen Filter der dazu ausgelegt und eingerichtet ist, Tageslicht nicht durchzulassen. Vorzugsweise wird Tageslicht zu mindestens 75 %, insbesondere zu mindestens 85 %, vorzugsweise zu mindestens 95 %, herausgefiltert. Auch bevorzugt ist ein Infrarotfilter, d.h. ein Filter der ausgelegt und eingerichtet ist, vorwiegend nur Infrarotlicht durchzulassen, insbesondere Infrarotlicht mit einer Wellenlänge von mindestens 780 nm. Ganz besonders bevorzugt sind auch Filterkombinationen, d. h. Kombinationen mehrere optischer Filter, die die vorstehend genannte Wirkung erzielen. Bevorzugt sind Tageslicht-Sperrfilter-Kombinationen, d. h. eine Filterkombination, die dazu ausgelegt und eingerichtet ist, Tageslicht nicht durchzulassen. Vorzugsweise wird Tageslicht zu mindestens 75 %, insbesondere mindestens 85 %, vorzugsweise mindestens 95 %, durch die Filterkombination herausgefiltert. Auch bevorzugt ist eine Infrarot-Filterkombination, d.h. eine Filterkombination die ausgelegt und eingerichtet ist, vorwiegend nur Infrarotlicht durchzulassen. Es hat sich gezeigt, dass hier weniger Störsignale vorhanden sind, insbesondere wenn ein Infrarotfilter oder ein Tageslicht-Sperrfilter bzw. entsprechende Kombinationen, wie vorstehend beschrieben, eingesetzt wird. Vorzugsweise weist der Lichtsensor einen Signalverstärker auf, der mit mindestens einem optischen Filter oder einer Filterkombination kombiniert wird.

Erfindungsgemäß ist der Lichtsensor auf den Wellenlängenbereich der Lichtquelle abgestimmt.

Eine Infrarotlichtquelle ist eine Lichtquelle, welche Infrarotlicht abgibt. Vorzugsweise handelt es sich um eine Lichtquelle, welche überwiegend Infrarotlicht abgibt, d.h. mindestens 50 % der erzeugten Photonen liegen in dem Spektralbereich von 780 nm bis 1 mm. Ganz besonders bevorzugt liegen mindestens 75 %, insbesondere mindestens 85 %, insbesondere bevorzugt mindestens 95 %, der Photonen in besagtem Spektralbereich oder - noch besser - im nahen Infrarot von 780 nm bis 1,4 µm.

In einer Ausgestaltung ist es vorgesehen, dass das Licht der Lichtquelle neben Infrarotlicht auch sichtbares Licht umfasst, insbesondere im Spektralbereich von 600 bis 780 nm, vorzugsweise jedoch nur ein Anteil von weniger als 50 %, insbesondere weniger als 25 %, insbesondere bevorzugt weniger als 10 %, der Photonen. Es hat sich gezeigt, dass dies bei der Ausrichtung der Lichtquelle hilfreich sein kann.

In einer Ausgestaltung des Verfahrens ist es vorgesehen, dass die Temperatur der Messstelle bestimmt wird, insbesondere mit einem berührungsfreien Infrarot-Thermometer. Hierbei hat es sich als vorteilhaft erwiesen, wenn diese Messung zu einem Zeitpunkt erfolgt, zu dem die Lichtquelle nicht aktiviert ist, um den Temperaturwert möglichst wenig zu beeinträchtigen. Vorzugsweise wird die Temperatur der Messstelle kurz vor der Feuchtigkeitsbestimmung gemessen.

Wenn der einfallende Lichtstrahl auf die Oberfläche, insbesondere den Oberflächenbereich, trifft, ist, der Einfallswinkel α der Winkel zwischen dem Lichtstrahl zum Lot auf diese Fläche, wobei das Lot definitionsgemäß orthogonal zu der Oberfläche, insbesondere dem Oberflächenbereich ausgerichtet ist. Der Reflexionswinkel β definiert sich auf gleiche Art - nach Durchlaufen der Trennfläche, d.h. es ist der Ausfallwinkel zwischen reflektiertem Lichtstrahl und dem vorstehend genannten Lot auf dieser Fläche.

Erfindungsgemäß entspricht der Reflexionswinkel β dem Einfallswinkel α oder die Abweichung des Reflexionswinkels β beträgt nicht mehr als 15°, ganz besonders bevorzugt nicht mehr als 10°.

Erfindungsgemäß sind der Reflexionswinkel β und der Einfallswinkel α größer als 48,6°, ganz besonders bevorzugt größer als 60°, vorzugsweise größer als 65°, insbesondere bevorzugt größer 75°, sind.

Erfindungsgemäß entspricht der Reflexionswinkel β dem Einfallswinkel α oder die Abweichung des Reflexionswinkels β von dem Einfallswinkel α beträgt nicht mehr als 15°, insbesondere nicht mehr als 10°. Dies entspricht der Reflexion an einer ebenen Oberfläche. Es hat sich gezeigt, dass die Anordnung von Lichtquelle und Lichtsensor opti-mal ist, wenn die vorstehende Bedingung erfüllt ist. In besagte Richtung wird erfahrungsgemäß - selbst bei unebenen Oberflächen - das meiste Licht reflektiert. Auch ist es einfacher, das System korrekt einzustellen, wenn die vorstehende Bedingung erfüllt ist.

In einer weiteren zweckmäßigen Ausgestaltung ist der Abstand zwischen Lichtquelle und Lichtsensor größer als die jeweiligen Abstände von Lichtquelle und Lichtsensor zur Oberfläche, insbesondere um ein Vielfaches größer. Es hat sich gezeigt, dass dies ebenfalls zu verbesserten Messergebnissen führt. So werden einerseits Umweltbedingungen an der Messstelle nicht beeinflusst und andererseits kann die Reflexion sichergestellt werden.

Vorzugsweise ist der Abstand von Lichtquelle und Lichtsensor zur Oberfläche kleiner als 50 cm, insbesondere kleiner als 30 cm, vorzugsweise im Bereich von 5 bis 25 cm. In diesem Abstand wird das Licht in optimaler Weise seitlich eingestrahlt.

Es hat sich ferner als vorteilhaft erwiesen, wenn die Bestrahlung mit dem Lichtstrahl von kurzer Dauer ist. Überraschenderweise hat sich gezeigt, dass sich bereits nach kurzer Zeit eine zuverlässige Messung erhalten lässt, wobei besonders vorteilhaft ist, dass die Feuchtigkeit der Wand nicht durch die Messung beeinträchtigt wird. Bei längeren Messungen, insbesondere mit Infrarotstrahlung, findet eine Wärmeübertragung durch den Lichtstrahl statt, welche die Wand trockener werden lässt. Dies kann die Messung und insbesondere auch zukünftige Messungen verfälschen. Es hat sich gezeigt, dass die Messdauer einer Messung vorzugsweise 0,01 bis 1800 Sekunden, insbesondere 0,1 bis 60 Sekunden, ganze besonders bevorzugt 0,1 bis 30 Sekunden, beträgt.

Vorzugsweise ist die Oberfläche die Oberfläche einer Gebäudefassade, insbesondere einer Gebäudefassade mit einer Oberfläche umfassend Putz, insbesondere Mineralputz.

Gelöst wird die Aufgabe ferner durch eine Messeinrichtung für die Bestimmung der Oberflächenfeuchtigkeit an Gebäudefassaden im Außenbereich, umfassend eine Lichtquelle und einen Lichtsensor und eine Tragevorrichtung für die Lichtquelle und den Lichtsensor, wobei die Lichtquelle an einem ersten Arm der Tragevorrichtung befestigt ist und der Lichtsensor an einem zweiten Arm der Tragevorrichtung befestigt ist, wobei der Abstand auf und/oder in der Tragevorrichtung zwischen Lichtquelle und Lichtsensor 20 bis 60 cm beträgt, wobei die Lichtquelle eine Pulslichtquelle mit einer Pulsfrequenz von 10 kHz bis 70 kHz ist und der Lichtsensor und/oder eine mit dem Lichtsensor verbundene Datenverarbeitungseinrichtung das Pulssignal von kontinuierlichen Störsignalen trennt, wobei die Lichtquelle eine Strahlung im Wellenbereich von 820 nm bis 1,5 µm abgibt, wobei der Lichtsensor eine Photodiodenzeile umfasst und/oder der Lichtsensor durch mehrere Photodioden auf einem Chip zusammen mit Integrations- und Ausleseschaltung ausgebildet ist, wobei die Tragevorrichtung so an einer feuchten Gebäudefassade anordnenbar ist, wobei der Lichtstrahl der Lichtquelle an Wasser, welches an der Gebäudefassade haftet, reflektiert wird und nach einer Reflexion auf den Lichtsensor trifft, und insbesondere wobei die Lichtquelle überwiegend Infrarotstrahlung abgibt, wobei der Reflexionswinkel β dem Einfallswinkel α entspricht oder die Abweichung des Reflexionswinkels β von dem Einfallswinkel α nicht mehr als 15° beträgt, wobei der Reflexionswinkel β und der Einfallswinkel α größer als 48,6° sind und wobei der Lichtsensor mindestens einen optischen Filter für sichtbares Licht umfasst.

Erfindungsgemäß ist die Lichtquelle an einem ersten Arm der Tragevorrichtung befestigt und der Lichtsensor an einem zweiten Arm der Tragevorrichtung befestigt, wobei die Tragevorrichtung so an einer feuchten Gebäudefassade anordnenbar ist.

Alternativ oder zusätzlich ist es bevorzugt, wenn die Tragevorrichtung eine Platte umfasst, an welcher die Lichtquelle befestigt ist. Alternativ oder zusätzlich hat es sich als zweckmäßig erwiesen, wenn die Tragevorrichtung ein Gitter, insbesondere ein Metallgitter, umfasst, an welcher die Lichtquelle und/oder der Lichtsensor befestigt sind.

In einer besonders geeigneten Ausgestaltung sind die Lichtquelle und/oder der Lichtsensor in eine Tragevorrichtung integriert, insbesondere wobei die Tragevorrichtung ein Gehäuse, vorzugsweise ein Gehäuse mit einer Höhe, einer Tiefe und einer Breite ist, wobei die Breite länger als die Höhe und die Tiefe ist und das Gehäuse mindestens eine Öffnung für die Lichtquelle und/oder mindestens eine Öffnung für den Lichtsensor umfasst, insbesondere wobei mindestens eine Breitseite des Gehäuses Öffnungen für die Lichtquelle und/oder den Lichtsensor bzw. den Lichtstrahl aufweist.

Vorzugsweise kann die Tragevorrichtung freistehend an der Wand angeordnet werden, insbesondere wobei die Tragevorrichtung eine Halterung umfasst, welche es erlaubt, die Tragevorrichtung frei und beabstandet von der Wand aufzustellen.

Die erfindungsgemäße Messeinrichtung eignet sich insbesondere auch für die Bestimmung der Oberflächenfeuchtigkeit an Gebäudefassaden in Form mineralischer Rauputz-Fassaden im Außenbereich.

Es hat sich gezeigt, dass mithilfe der vorstehend beschriebenen Messeinrichtung die Oberflächenfeuchtigkeit über die Menge an reflektiertem Licht bestimmt werden kann, wie dies mit dem vorstehenden Verfahren beschrieben wurde. Das Ergebnis einer solchen Messung zur Bestimmung der Feuchtigkeit ist zuverlässiger als eine herkömmliche Lichtabsorptionsmessung oder Wärmebildmessung. Die Messung kann einfach und zuverlässig mit dem vorstehend beschriebenen, insbesondere zweiarmigen, System durchgeführt werden. Die Arme stellen vorzugsweise sicher, dass die Lichtquelle und der Lichtsensor einen geeigneten Abstand voneinander und ggf. von der Fassade haben. Auch wird sichergestellt, dass der Winkel korrekt für die Messung ist, d.h. der Strahlengang optimal für eine Reflexion ausgerichtet ist.

Die vorstehend genannten Messeinrichtungen werden nachstehend eingehender beschrieben. Ferner werden weitere Aspekte beschrieben, die vorteilhafte Ausgestaltungen des Verfahrens zu Messung und/oder Beobachtung der Feuchtigkeit betreffen. In einer besonders bevorzugten Ausgestaltung wird für die Durchführung des Verfahrens zu Messung und/oder Beobachtung der Feuchtigkeit die Messeinrichtung entsprechend der vorliegenden Offenbarung eingesetzt. Vorstehend genannte Eigenschaften des Verfahrens bilden auch vorteilhafte Eigenschaften der Messeinrichtung, soweit funktionelle oder strukturelle Merkmale betroffen sind, die auch bei der Messeinrichtung implementiert werden können.

Vorzugsweise ist die Tragevorrichtung so an einer feuchten Gebäudefassade anordnenbar, dass der Lichtstrahl der Lichtquelle an Wasser, welches an der Gebäudefassade haftet, reflektiert wird und nach einer Reflexion auf den Lichtsensor trifft, wobei Lichtquelle und Lichtsensor im Wesentlichen den gleichen Abstand zur Gebäudewand aufweisen. Ein im Wesentlichen gleicher Abstand liegt vor, wenn die Abweichung nicht mehr als 5 % beträgt.

Gebäudefassaden in Sinne der Erfindung sind vorzugsweise Fassaden im Außenbereich. Ganz besonders bevorzugt handelt es sich Fassaden, welche mit einem Putz versehen wurden. In einigen Ausgestaltungen kann die Fassade zusätzlich einen Anstrich aufweisen. Als besonders geeignet hat sich die Erfindung für mineralische Rauputz-Fassaden erwiesen. Hier lassen sich trotz der Unebenheit der Oberfläche reproduzierbare Ergebnisse erzielen.

Vorzugsweise ist die Tragevorrichtung eine Metallkonstruktion. Metallbauteile haben sich als geeignet erwiesen, um eine hinreichende Stabilität zu erzielen und gleichzeitig nah an die Wand heranzukommen.

In einigen zweckmäßigen Ausgestaltungen weist die Tragevorrichtung neben einem ersten Arm und einem zweiten Arm eine Stützeinrichtung, insbesondere umfassend Metall, auf. In einer geeigneten Ausführungsform kann es vorgesehen sein, dass die Stützeinrichtung gegenüber den Armen verstellbar ist, insbesondere so dass die Arme verschiebbar, verdrehbar oder schwenkbarsind. Als besonders vorteilhaft hat sich herausgestellt, wenn die Stützeinrichtung mindestens ein Standbein aufweist, um auf den Erdbodengestellt oder an einer Gebäudefassade befestigt zu werden. Ferner ist es vorteilhaft, wenn die Verstellbarkeit der Arme nur in einemsolchen Bereich möglich ist, dass sich Lichtsensor und Lichtquelle beim Verstellen immer in derselben Ebene befinden, d.h. alle Verstellpositionen lassen sich Positionen innerhalb einer gedachten mathematischen Ebene zuordnen, insbesondere wenn die Stützeinrichtung fest positioniert ist bzw. das Stützbein das Referenzsystem ist. Die Verstellung kann beispielsweise durch eine Schiene erfolgen, auf welcher die Lichtquelle und den Lichtsensor verschiebbar mit ihrem jeweiligen Arm gelagert sind.

In einer vorteilhaften Ausgestaltung sind die Lichtquelle und der Lichtempfängerin einem Gerät integriert. Ferner ist es vorzugsweise möglich, mit diesem Gerät, das verschiebbar (elektrisch oder manuell) auf einem Schienensystem aufgebracht wurde, an verschiedenen Fassadenstellen Messungen vorzunehmen.

In einer vorteilhaften Ausgestaltung befindet sich mindestens eine Körperachse der Lichtquelle, mindestens eine Körperachse des Lichtsensors, mindestens eine Körperachse des ersten Arms, mindestens eine Körperachse des zweiten Arms sowie vorzugsweise mindestens eine Körperachse der Tragevorrichtung alle zusammen in derselben mathematischen Ebene. Dies resultiert in einer schmalen Messeinrichtung, welche nahe an der Wand für eine optimale, störungsarme Messung platziert werden kann.

Der Lichtsensor ist ein Halbleiterdetektor zur Messung von Infrarotstrahlung, insbesondere umfassend eine Photodiodenzeile. Besonders bevorzugt ist ein Lichtsensor, umfassend eine Photodiodenzeile, insbesondere der durch mehrere Photodioden in einer Reihe auf einem Chip zusammen mit Integrations- und Ausleseschaltung, insbesondere integriert, ausgebildet ist, die eine Photodiodenzeile bilden. Es hat sich gezeigt, dass derartige Lichtsensoren im Außenbereich besonders robust und zuverlässig arbeiten. Vorteilhafte Ausgestaltungen der Messeinrichtung und/oder des Verfahrens zur Messung und/oder Beobachtung der Feuchtigkeit weisen daher einen solchen Lichtsensor auf.

Vorzugsweise umfasst die Messeinrichtung ein Thermometer, insbesondere ein berührungsfreies Infrarot-Thermometer.

Vorzugsweise gibt die Lichtquelle überwiegend, insbesondere zu mindestens 75%, vorzugsweise mindestens 85 %, insbesondere bevorzugt mindestens 95 %, Infrarotstrahlung im Wellenlängenbereich von 820 nm bis 1,5 µm, vorzugsweise Infrarotstrahlung im Wellenlängenbereich 840 nm bis 1,0 µm, ab. Die vorstehenden Prozentzahlen zur Strahlung beziehen sich auf die Anzahl der von der Lichtquelle emittierten Photonen. Es hat sich gezeigt, dass diese Wellenlängenbereiche ein besonders störungsarmes Signal ergeben, insbesondere die Infrarotstrahlungsbereiche. Somit sind entsprechende Messeinrichtungen und entsprechende Verfahren zur Messung und/oder Beobachtung der Feuchtigkeit besonders vorteilhaft. Dies wird unter anderem darauf zurückgeführt, dass Sonnenlicht vorrangig in einem anderen Spektralbereich aufritt.

In einer bevorzugten Ausgestaltung ist es vorgesehen, dass der Abstand auf und/oder in der Tragevorrichtung zwischen Lichtquelle und Lichtsensor 30 bis 50 cm beträgt, insbesondere dass der erste Arm und der zweite Arm der Tragevorrichtung so ausrichtbar oder so fest montiert sind, dass dieser Abstand erhalten wird. Es hat sich überraschenderweise gezeigt, dass dieser - vergleichsweise große - Abstand in einem besonders störungsarmen Signal beim Lichtsensor resultiert. Umwelteinflüsse wie Regen und Sonne treten hier homogener auf. Durch den großen Abstand sind nicht einzelne Regentropfen maßgeblich, sondern der Regen als solches. Damit ist der Störeinfluss deutlich besser zu kompensieren. Ferner ist es wichtig, dass so Außenmessungen durchgeführt werden können, bei welchen die Messapparatur die Messung in dem Oberflächenbereich aufgrund des großen Abstand nicht beeinträchtigt, d.h. Regen und Sonne werden nicht durch Lichtquelle, Lichtsensor oder andere Vorrichtungen abgeschirmt. So kann über Langzeitmessungen tatsächlich ein repräsentatives Bild erhalten, welches es erlaubt den Oberflächenbereich unter der Einwirkung von Umwelteinflüssen über einen längeren Zeitraum zu beobachten.

Abstände im Sinne der Erfindung sind die kürzesten Abstände zwischen den Vergleichsobjekten. Der Abstand zwischen Lichtquelle und Lichtsensor ist also die minimale Länge, welche ein gedachter Faden benötigt, um von der Lichtquelle bis zum Lichtsensor zu reichen. Abstände zur Oberfläche bzw. zur Gebäudefassade werden grundsätzlich orthogonal zu Ebene der Fassade bestimmt. Vorzugsweise handelt es sich bei der Oberfläche bzw. Gebäudefassade um eine plane, jedoch nicht notwendigerweise absolut glatte, Fläche. Verputzte Fassaden weisen eine eindeutig bestimmbare Ebene auf, zu der sich der orthogonale Abstand bestimmen lässt, wobei der Putz eine gewisse Oberflächenrauigkeit bewirkt. Falls die Ebene ausnahmsweise nicht eindeutig bestimmbar ist, beispielsweise wenn die Fassade gekrümmt ist (z. B. ein halbkreisförmiger Erker einem Gebäude), ist der Abstand auch hier der kürzeste Abstand zur Fassade. Vorzugsweise ist die Gebäudefassade eine ebene Gebäudefassade, insbesondere eine strukturierte ebene Gebäudefassade.

In einer Ausgestaltung der Messeinrichtung und/oder des Verfahrens zur Messung und/oder Beobachtung der Feuchtigkeit ist es vorgesehen, dass die Lichtquelle eine hohe Leistung aufweist, insbesondere im Wattbereich. Vorzugsweise ist die Mindestleistung 1 Watt, insbesondere 5 Watt, insbesondere bevorzugt 10 Watt. Im Gegensatz zur Absorptionsmessung ist eine höhere Leistung mit einem besseren Messsignal verbunden. Bei der Absorptionsmessung kann eine zu hohe Leistung eher zu einer Übersättigung führen.

Erfindungsgemäß ist die Lichtquelle eine Pulslichtquelle mit einer Pulsfrequenz von 10 kHz bis 70 kHz. Sonnenlicht weist eine solche Frequenz nicht auf, sondern ist kontinuierlich. Vorzugsweise weist der Lichtsensor einen Filter oder eine Datenverarbeitungseinrichtung zur Filterung auf oder ist mit einer Datenverarbeitungseinrichtung zur Filterung verbunden, wobei die Datenverarbeitungseinrichtung und/oder der Filter die Pulsfrequenz nutzt, um das Sonnenlicht als Störsignal herauszufiltern. Hierbei kann es sich um einen elektronischen Filter handeln. Vorteilhafte Ausgestaltungen der Messeinrichtung und/oder des Verfahrens zur Messung der und/oder Beobachtung Feuchtigkeit weisen daher eine solche Lichtquelle auf.

Erfindungsgemäß ist es vorgesehen, dass der Lichtsensor mindestens einen optischen Filter umfasst, insbesondere einen Filter für sichtbares Licht. Vorzugsweise handelt es sich um einen Tageslicht-Sperrfilter, d.h. einen Filter der dazu ausgelegt und eingerichtet ist, Tageslicht nicht durchzulassen. Auch bevorzugt ist ein Infrarot-Filter, d.h. einen Filter der ausgelegt und eingerichtet ist, vorwiegend nur Infrarotlicht durchzulassen. Ebenso sind Filterkombinationen bevorzugt, die eine entsprechende Wirkung erzielen. Entsprechende Filter und Filterkombinationen wurden bereits vorstehend diskutiert. Vorzugsweise weist der Lichtsensor einen Signalverstärker auf, der mit mindestens einem optischen Filter oder einer Filterkombination kombiniert wird.

In einer Ausgestaltung umfasst die Messeinrichtung eine Energiequelle in Form eines Ackus oder einer Batterie, wobei die Energiequelle ausgelegt und eingerichtet ist, die Messeinrichtung für mindestens 24 Stunden, insbesondere mindestens 240 Stunden, vorzugsweise mindestens 2400 Stunden, autark zu betreiben, vorzugsweise wobei 1 bis 3600 Messungen, insbesondere bevorzugt 1 bis 360 Messungen, ganz besonders bevorzugt 1 bis 20 Messungen, pro Stunde erfolgen. Es hat sich gezeigt, dass eine solche Messeinrichtung geeignet ist, um eine Langzeitmessung durchzuführen. Überraschenderweise ist die erfindungsgemäße Messeinrichtung sehr sparsam im Energieverbrauch, insbesondere bei Verwendung des oben beschriebenen Halbleiterdetektors, so dass Messungen über Wochen und Monate hinweg ermöglich werden. Die Messeinrichtung ist einfacher und robuster als herkömmliche Systeme, so dass ein autarker Langzeit-Außeneinsatz hier in Frage kommt.

In einer zweckmäßigen Ausgestaltung weist die Messeinrichtung eine Überdachung auf, welche diese vor Sonne und Regen schützt. Die Überdachung kann sich dabei über die Lichtquelle, die Tragevorrichtung und/oder den Lichtsensor erstrecken. Vorzugsweise erstreckt sich die Überdachung zumindest über den Lichtsensor. Die vorstehende Ausgestaltung ist besonders für den dauerhaften Außeneinsatz geeignet.

Die Aufgabe wird auch gelöst durch eine Gebäudewand und eine Messeinrichtung, wie diese vorstehend beschrieben wurde.

In einer Ausgestaltung sind Messeinrichtung und Gebäudewand benachbart angeordnet, insbesondere mit einem Abstand von weniger als 100 cm, insbesondere bevorzugt weniger als 50 cm, ganz besonders bevorzugt weniger als 30 cm.

Vorzugsweise ist die Messeinrichtung an der Gebäudewand fixiert, insbesondere über ein Metallgerüst und/oder einen Metallarm und/oder die Tragevorrichtung der Messeinrichtung, welcher in der Gebäudewand verankert sein kann.

Die Erfindung betrifft ferner die Verwendung der Messeinrichtung, wie sie vorstehend beschrieben wurde, für die Bestimmung der Oberflächenfeuchtigkeit der Oberfläche eine Gebäudefassade, insbesondere mittels Änderung der Lichtintensität des reflektierten Lichtstrahls und/oder des Reflexionsgrades, insbesondere Infrarotlicht, an

Wasser. Dies betrifft insbesondere auch eine Gebäudefassade mit einem Rauputz mit einer Körnung von 0,1 bis 5 mm, vorzugsweise 0,2 bis 4 mm, insbesondere bevorzugt 0,3 bis 3 mm. Es hat sich gezeigt, die Messung trotz dieser Körnungen gute und verlässliche Ergebnisse liefert.

Die Erfindung betrifft ferner die Verwendung der Messeinrichtung, wie sie vorstehend beschrieben wurde, für die Bestimmung der Gefahr eines Befalls mit Mikroorganismen, Algen und/oder Schimmel.

Die Erfindung betrifft ferner die Verwendung der Messeinrichtung, wie sie vorstehend beschrieben wurde, für Dosierung von Bioziden für die Aufbringung auf Oberflächen, insbesondere von Gebäudefassaden, und/oder die Bestimmung des geeigneten Zeitpunkts für die Aufbringung von Bioziden auf Oberflächen von Gebäuden, insbesondere von Gebäudefassaden.

Die vorliegende Erfindung bietet ein Verfahren, mit welchem die Feuchtigkeit an der Oberfläche unabhängig von der Feuchtigkeit unterhalb der Oberfläche bestimmt werden kann. Insbesondere im Oberflächenbereich wechselt der Grad an Feuchtigkeit häufig, beispielsweise aufgrund der Wetterbedingungen. Hier hat sich mit dem vorliegenden Verfahren gezeigt, dass diese Wechsel an der Oberfläche messtechnisch über Langzeitmessungen verfolgt werden können, ohne dass die Umweltbedingungen im Messbereich bezüglich Sonne und Regen durch die Messung beeinträchtigt werden. Die so erlangten Informationen bieten eine wertvolle Hilfe bei der Entscheidung in welchen Mengen Biozide eingesetzt werden. Durch die Nutzung der Eigenschaft der Reflexion und ggf. von störungsmindernden Maßnahmen wird eine sehr zuverlässige Messung ermöglicht. Vereinfacht wird die Messung noch durch die erfindungsgemäße Messeinrichtung zur Durchführung des Verfahrens. Weiter vorteilhafte Ausgestaltungen werden anhand der Figuren erläutert. Dabei zeigen:
- Figur 1: eine schematische Darstellung der Messanordnung des Verfahrens,
- Figur 2: eine weitere schematische Darstellung der Messanordnung des Verfahrens,
- Figur 3: eine schematische Darstellung einer bevorzugten Ausgestaltung der Messeinrichtung in einer Frontalansicht, und
- Figur 4: eine perspektivische Ansicht einer bevorzugten Ausgestaltung der Messeinrichtung,
- Figur 5: eine Wiedergabe von Messergebnissen, die mit dem Verfahren erhalten wurden.

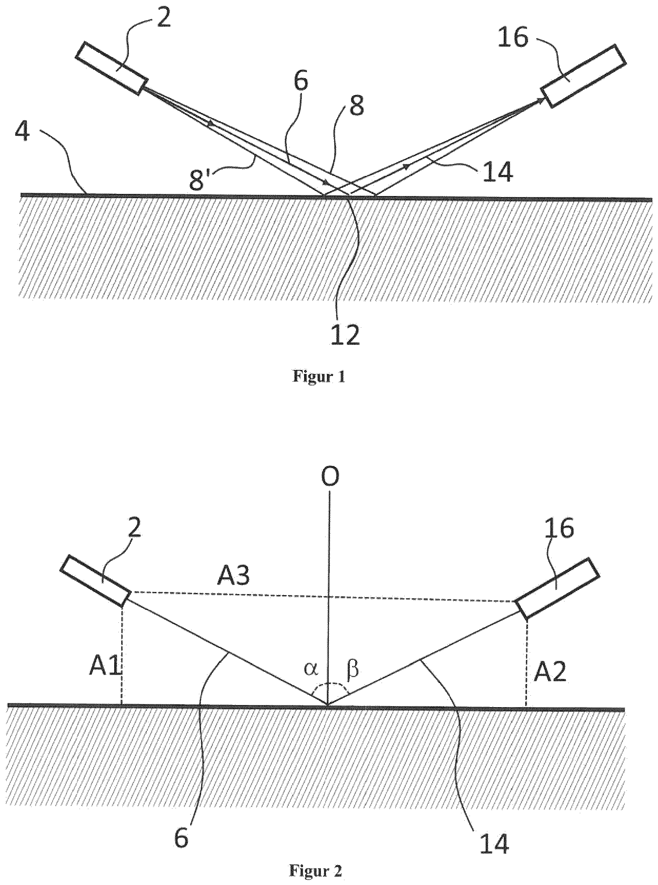

Figur 1 zeigt die Messeanordnung für die Bestimmung der Oberflächenfeuchtigkeit an Gebäudefassaden mit der Lichtquelle (2) und dem Lichtsensor (16). Eine Tragevorrichtung ist aus Gründen der Übersichtlichkeit nicht wiedergegeben. Der Lichtstrahl (6) der Lichtquelle (2) wird an Wasser, welches an der Oberfläche (4) der Gebäudefassade haftet, reflektiert und zwar in einem feuchten Oberflächenbereich (12), der durch den Kegel (8, 8') des Lichtstrahls (6) erfasst wird. Der aus der Reflexion resultierende reflektierte Lichtstrahl (14) wird durch den Lichtsensor (16) erfasst.

Figur 2 zeigt dieselbe Messeanordnung wie in Figur 1 mit der Lichtquelle (2) und dem Lichtsensor (16) sowie dem Lichtstrahl (6) der Lichtquelle (2) und dem reflektierten Lichtstrahl (14). Der Lichtstrahl (6) trifft unter einem Einfallswinkel α auf den Oberflächenbereich und wird unter einem Reflexionswinkel β reflektiert. Vorliegend sind die Winkel gleich groß. Das reflektierte Licht, insbesondere Infrarotlicht, wird durch den Lichtsensor 16 detektiert. Der Lichtstrahl (6) entspricht der Richtung des einfallenden Strahlengangs und der Lichtstrahl (14) der Richtung des reflektierten Strahlengangs. Der Abstand zwischen Lichtquelle und Lichtsensor A3 ist um ein Vielfaches größer als die jeweiligen Abstände A1 und A2 von Lichtquelle und Lichtsensor zur Oberfläche. Die Abstände zur Oberfläche werden orthogonal zur Oberfläche bestimmt.

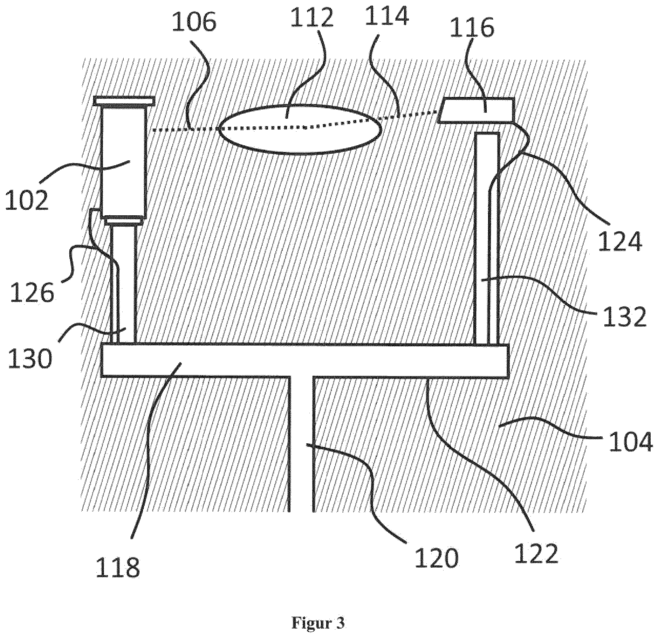

Figur 3 zeigt die Messeinrichtung für die Bestimmung der Oberflächenfeuchtigkeit an Gebäudefassaden (104), umfassend eine Lichtquelle (102) und einen Lichtsensor (116) und eine Tragevorrichtung (120) für die Lichtquelle (102) und den Lichtsensor (116), wobei die Lichtquelle (102) an einem ersten Arm (130) der Tragevorrichtung (120) befestigt ist und der Lichtsensor (116) an einem zweiten Arm (132) der Tragevorrichtung (120) befestigt ist. Hierbei ist die Tragevorrichtung (120) so an der feuchten Oberfläche (104) einer Gebäudefassade angeordnet, dass der Lichtstrahl (106) der Lichtquelle (102) an einem feuchten Oberflächenbereich (112) durch Wasser, welches an der Gebäudefassade haftet, reflektiert wird und der reflektierte Lichtstrahl (114) nach der Reflexion auf den Lichtsensor (116) trifft. Im vorliegenden Fall weist die Tragevorrichtung einen Querbalken auf, auf welchem die Arme (130, 132) verschiebbar gelagert sind, wobei der Querbalken einen Bereich (118) für den ersten Arm (130) und einen gegenüberliegenden Bereich (122) für den zweiten Arm umfasst. Lichtquelle (102) und Lichtsensor (116) werden über stromführende Kabel (126, 124) mit Energie versorgt.

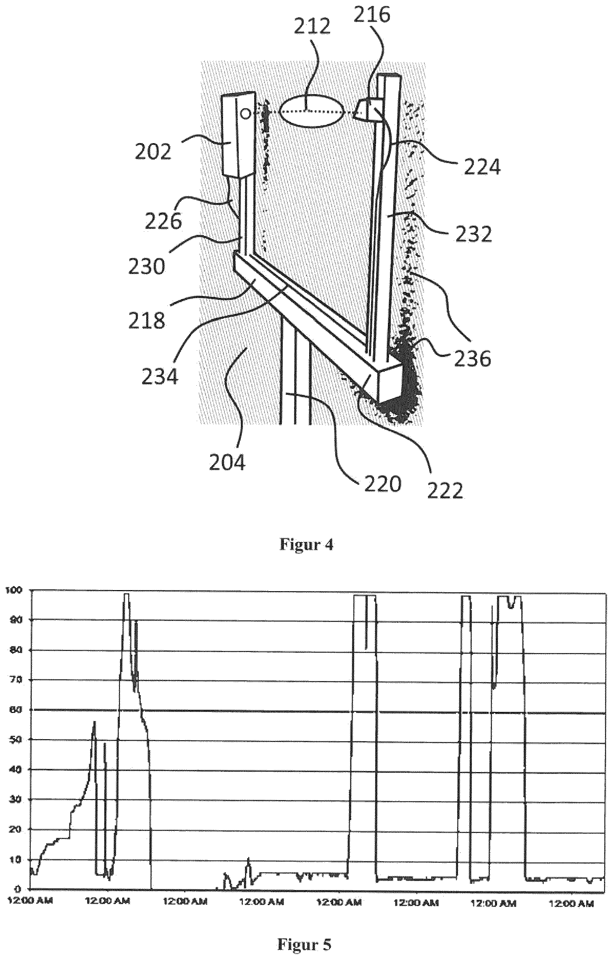

Figur 4 zeigt eine perspektivische Ansicht der Messeinrichtung für die Bestimmung der Oberflächenfeuchtigkeit an Gebäudefassaden (204), umfassend die Lichtquelle (202) und den Lichtsensor (216) und die Tragevorrichtung (220) mit Querbalken mit einem Bereich (218) für den ersten Arm (230) und einen gegenüberliegenden Bereich (222) für den zweiten Arm (232). Hierbei ist die Tragevorrichtung (220) so an einem feuchten Oberflächenbereich (212) der Oberfläche (204) der Gebäudefassade angeordnet, dass der Lichtstrahl an dem feuchten Oberflächenbereich (212) durch Wasser, welches an der Gebäudefassade haftet, reflektiert wird und auf den Lichtsensor (216) trifft. Lichtquelle (202) und Lichtsensor (216) werden über stromführende Kabel (226, 224) mit Energie versorgt. Der Querbalken weist eine Schiene (234) auf, auf welche die Arme (230, 232) verschiebbar sind. Um den recht kurzen Abstand zur Wand zu verdeutlichen, wurde der Schattenwurf (236) der Messeinrichtung angedeutet.

Figur 5 zeigt beispielhaft den zeitlichen Verlauf bei einer experimentellen Messung der Amplitude des reflektieren Lichts für einige Tage. Die Amplitude von 100 entspricht einer maximalen Feuchtigkeit, d.h. es wird auch eine maximale Menge an Licht reflektiert. Die Messung über mehrere Tage (die Mittagszeit ist jeweils angegeben) zeigt, wie die Feuchtigkeit variiert und durch die Amplitude der Reflexion beobachtet werden kann. Besonders vorteilhaft ist, dass der Einfluss von Umweltbedingungen durch die Messeinrichtung bzw. das Messverfahren nicht verändert werden.

## Patentansprüche

1. Verfahren zur Messung und/oder Beobachtung der Oberflächenfeuchtigkeit von Gebäudefassaden in einem Oberflächenbereich, wobei das Verfahren folgende Schritte umfasst:
a) Anordnung einer an einer Tragvorrichtung befestigten Lichtquelle (2) beabstandet von der Oberfläche, so dass der Strahlengang eines einfallenden Lichtstrahls (6), der durch die Lichtquelle (2) erzeugt wird, unter einem Einfallswinkel α auf den Oberflächenbereich (12) trifft,
b) Reflexion des einfallenden Lichtstrahls (6) an Wasser, welches an dem Oberflächenbereich (12) haftet, unter einem Reflexionswinkel β, so dass der Strahlengang eines reflektierten Lichtstrahls (14) mit einer Lichtintensität, insbesondere einem Reflexionsgrad, ausgebildet wird,
c) Detektion des reflektierten Lichtstrahls (14) durch einen an der Tragvorrichtung befestigten Lichtsensor (16), welcher im Strahlengang des reflektierten Lichtstrahls (14) angeordnet ist,
d) Auswertung des Ausgabesignals des Lichtsensors (16), wobei der Lichtintensität, insbesondere dem Reflexionsgrad, des reflektierten Lichtstrahls (14) eine Oberflächenfeuchtigkeit zugeordnet wird und wobei eine Änderung der Oberflächenfeuchtigkeit über eine Änderung der Lichtintensität, insbesondere des Reflexionsgrades, des reflektierten Lichtstrahls (14) verfolgt wird,
wobei der Reflexionswinkel β dem Einfallswinkel α entspricht oder die Abweichung des Reflexionswinkels β von dem Einfallswinkel α nicht mehr als 15° beträgt, die Lichtquelle (2) eine Pulslichtquelle mit einer Pulsfrequenz von 10 kHz bis 70 kHz ist und der Lichtsensor (16) und eine mit dem Lichtsensor (16) verbundene Datenverarbeitungseinrichtung das Pulssignal von kontinuierlichen Störsignalen trennen, die Lichtquelle (2) eine Strahlung im Wellenbereich von 820 nm bis 1,5 µm abgibt,
und wobei der Lichtsensor (16) mindestens einen optischen Filter umfasst, um Tageslicht und/oder sichtbares Licht im Wesentlichen vollständig oder überwiegend herauszufiltern, und/oder der Lichtsensor (16) auf den Wellenlängenbereich der Lichtquelle abgestimmt ist, **dadurch gekennzeichnet, dass** der Reflexionswinkel β und der Einfallswinkel α größer als 48,6° sind, dass der Lichtsensor (16) eine Photodiodenzeile umfasst und/ oder der Lichtsensor (16) durch mehrere Photodioden auf einem Chip zusammen mit Integrations- und Ausleseschaltung ausgebildet ist und dass der Abstand auf und/oder in der Tragevorrichtung zwischen Lichtquelle (2, 102, 202) und Lichtsensor (16, 116, 216) 20 bis 60 cm beträgt.

2. Verfahren nach Anspruch 1, **dadurch gekennzeichnet, dass** der Lichtsensor (16) und/oder die mit dem Lichtsensor (16) verbundene Datenverarbeitungseinrichtung das Pulssignal von kontinuierlichen Störsignalen mittels eines elektronischen Filters trennt.

3. Verfahren nach Anspruch 1 oder 2, **dadurch gekennzeichnet, dass** der Reflexionswinkel β dem Einfallswinkel α entspricht oder die Abweichung des Reflexionswinkels β von dem Einfallswinkel α nicht mehr als 10° beträgt.

4. Verfahren nach einem der vorangehenden Ansprüche, **dadurch gekennzeichnet, dass**
der Reflexionswinkel β und/oder der Einfallswinkel α größer als 60°, vorzugsweise größer als 65°, ist.

5. Verfahren nach einem der vorangehenden Ansprüche, **dadurch gekennzeichnet, dass**
die Lichtquelle (2) eine Strahlung im Wellenbereich von 840 nm bis 1,2 µm abgibt.

6. Verfahren nach einem der vorangehenden Ansprüche, **dadurch gekennzeichnet, dass**
die mehreren Photodioden des Lichtsensors in Reihe auf einem Chip zusammen mit Integrations- und Ausleseschaltung integriert vorliegen.

7. Messeinrichtung für die Bestimmung der Oberflächenfeuchtigkeit an Gebäudefassaden (104, 204) im Außenbereich, umfassend eine Lichtquelle (2, 102, 202) und einen Lichtsensor (16, 116, 216) und eine Tragevorrichtung (120, 220) für die Lichtquelle (2, 102, 202) und den Lichtsensor (16, 116, 216), wobei die Lichtquelle (2) eine Pulslichtquelle mit einer Pulsfrequenz von 10 kHz bis 70 kHz ist und der Lichtsensor (16) und/oder eine mit dem Lichtsensor (16) verbundene Datenverarbeitungseinrichtung das Pulssignal von kontinuierlichen Störsignalen trennt und die Lichtquelle (2) eine Strahlung im Wellenbereich von 820 nm bis 1,5 qm abgibt und der Lichtsensor (16, 116, 216) mindestens einen optischen Filter für sichtbares Licht umfasst, **dadurch gekennzeichnet, dass**
die Lichtquelle (2, 102, 202) an einem ersten Arm (130, 230) der Tragevorrichtung (120, 220) befestigt ist und der Lichtsensor (16, 116, 216) an einem zweiten Arm (132, 232) der Tragevorrichtung befestigt ist,
dass der Abstand auf und/oder in der Tragevorrichtung zwischen Lichtquelle (2, 102, 202) und Lichtsensor (16, 116, 216) 20 bis 60 cm beträgt,
dass der Lichtsensor (16) eine Photodiodenzeile umfasst und/oder der Lichtsensor (16) durch mehrere Photodioden auf einem Chip zusammen mit Integrations- und Ausleseschaltung ausgebildet ist,
dass die Tragevorrichtung (120, 220) so an einer feuchten Gebäudefassade (104, 204) anordnenbar ist, dass der Lichtstrahl (6, 14) der Lichtquelle (2, 102, 202) an Wasser, welches an der Gebäudefassade (104, 204) haftet, reflektiert wird und nach einer Reflexion auf den Lichtsensor (16, 116, 216) trifft,
dass der Reflexionswinkel β dem Einfallswinkel α entspricht oder die Abweichung des Reflexionswinkels β von dem Einfallswinkel α nicht mehr als 15° beträgt und dass der Reflexionswinkel β und der Einfallswinkel α größer als 48,6° sind.

8. Messeinrichtung nach Anspruch 7, **dadurch gekennzeichnet, dass** die Lichtquelle (2, 102, 202) Strahlung im Wellenlängenbereich von 840 nm bis 1,2 µm, abgibt.

9. Messeinrichtung nach Anspruch 7 oder 8, **dadurch gekennzeichnet, dass** dass der Lichtsensor (16, 116, 216) mindestens einen elektronischen Filter umfasst.

10. Messeinrichtung nach einem der Ansprüche 7 bis 9, **dadurch gekennzeichnet, dass** die mehreren Photodioden des Lichtsensors in Reihe auf einen Chip zusammen mit Integrations- und Ausleseschaltung integriert vorliegen.

11. Verwendung der Messeinrichtung nach einem der Ansprüche 7 bis 10 für die Bestimmung der Oberflächenfeuchtigkeit der Oberfläche einer Gebäudefassade, insbesondere mittels der Lichtintensität eines reflektierten Lichtstrahls und/oder mittels dessen Reflexionsgrads, insbesondere Infrarotlicht, an Wasser und/oder für die Bestimmung der Gefahr eines Befalls mit Mikroorganismen, Algen und/oder Schimmel.

## Claims

1. A method for measuring and/or monitoring the surface moisture of building facades in a surface region, wherein the method comprises the following steps:
a) arrangement of a light source (2) fastened to a supporting device at a distance from the surface, such that the beam path of an incident light beam (6), which is produced by the light source (2), strikes the surface region (12) at an angle of incidence a,
b) reflection of the incident light beam (6) by water adhering to the surface region (12), at an angle of reflection β, such that the beam path of a reflected light beam (14) is formed with a light intensity, in particular a degree of reflection,
c) detection of the reflected light beam (14) by a light sensor (16) fastened to the supporting device, which sensor is arranged in the beam path of the reflected light beam (14),
d) evaluation of the output signal of the light sensor (16), wherein a surface moisture is assigned to the light intensity, in particular the degree of reflection, of the reflected light beam (14), and wherein a change in the surface moisture is tracked by way of a change in the light intensity, in particular in the degree of reflection, of the reflected light beam (14),
wherein
the angle of reflection β corresponds to the angle of incidence α or the deviation of the angle of reflection β from the angle of incidence α is not more than 15°,
the light source (2) is a pulse light source having a pulse frequency of 10 kHz to 70 kHz and the light sensor (16) and a data processing device connected to the light
sensor (16) separate the pulse signal from continual interference signals, the light source (2) emits radiation in the wave range from 820 nm to 1.5 µm, and wherein
the light sensor (16) comprises at least one optical filter in order to filter out daylight and/or visible light substantially completely or predominantly, and/or the light sensor (16) is adjusted to the wavelength range of the light source,
**characterized in that** the angle of reflection β and the angle of incidence α are greater than 48.6°, that the light sensor (16) comprises a photodiode array and/or the light sensor (16) is formed by multiple photodiodes on a chip together with an integration and readout circuit, and that the distance on and/or in the supporting device between the light source (2, 102, 202) and light sensor (16, 116, 216) is 20 to 60 cm.

2. The method according to Claim 1, **characterized in that**
the light sensor (16) and/or the data processing device connected to the light sensor (16) separate(s) the pulse signal from continual interference signals by means of an electronic filter.

3. The method according to Claim 1 or 2, **characterized in that** the angle of reflection β corresponds to the angle of incidence a or the deviation of the angle of reflection β from the angle of incidence α is not more than 10°.

4. The method according to any one of the preceding claims, **characterized in that** the angle of reflection β and/or the angle of incidence α is/are greater than 60°, preferably greater than 65°.

5. The method according to any one of the preceding claims, **characterized in that** the light source (2) emits radiation in the wave range from 840 nm to 1.2 µm.

6. The method according to any one of the preceding claims, **characterized in that** the multiple photodiodes of the light sensor are integrated in a row on a chip together with an integration and readout circuit.

7. A measuring device for determining the surface moisture on building facades (104, 204) outdoors, comprising
a light source (2, 102, 202) and a light sensor (16, 116, 216) and a supporting device (120, 220) for the light source (2, 102, 202) and the light sensor (16, 116, 216), wherein the light source (2) is a pulse light source having a pulse frequency of 10 kHz to 70 kHz and the light sensor (16) and/or a data processing device connected to the light sensor (16) separate(s) the pulse signal from continual interference signals and
the light source (2) emits radiation in the wave range from 820 nm to 1.5 µm and the light sensor (16, 116, 216) comprises at least one optical filter for visible light **characterized in that**
the light source (2, 102, 202) is fastened to a first arm (130, 230) of the supporting device (120, 220) and the light sensor (16, 116, 216) is fastened to a second arm (132, 232) of the supporting device,
that the distance on and/or in the supporting device between the light source (2, 102, 202) and the light sensor (16, 116, 216) is 20 to 60 cm,
that the light sensor (16) comprises a photodiode array and/or the light sensor (16) is formed by multiple photodiodes on a chip together with an integration and readout circuit,
that the supporting device (120, 220) can be arranged on a moist building facade (104, 204) such that the light beam (6, 14) of the light source (2, 102, 202) is reflected by water adhering to the building facade (104, 204) and, following reflection, strikes the light sensor (16, 116, 216),
that the angle of reflection β corresponds to the angle of incidence α or the deviation of the angle of reflection β from the angle of incidence α is not more than 15°, and that the angle of reflection β and the angle of incidence a are greater than 48.6°.

8. The measuring device according to Claim 7, **characterized in that** the light source (2, 102, 202) emits radiation in the wavelength range from 840 nm to 1.2 µm.

9. The measuring device according to Claim 7 or 8, **characterized in that** the light sensor (16, 116, 216) comprises at least one electronic filter.

10. The measuring device according to any one of Claims 7 to 9, **characterized in that** the multiple photodiodes of the light sensor are integrated in a row on a chip together with an integration and readout circuit.

11. Use of the measuring device according to any one of Claims 7 to 10 for determining the surface moisture of the surface of a building facade, in particular by means of the light intensity of a reflected light beam and/or by means of the degree of reflection thereof, in particular infrared light, by water, and/or for determining the risk of attack by microorganisms, algae and/or mold.

## Revendications

1. Procédé pour la mesure et/ou l'observation de l'humidité de surface de façades de bâtiments dans une zone de surface, le procédé comprenant les étapes suivantes :
a) arrangement d'une source lumineuse (2) fixée sur un dispositif support à distance de la surface, de telle sorte que le trajet de faisceau d'un faisceau lumineux incident (6), lequel est généré par la source lumineuse (2), frappe la zone de surface (12) avec un angle d'incidence a,
b) réflexion du faisceau lumineux incident (6) sur de l'eau qui adhère sur la zone de surface (12), avec un angle de réflexion β, de telle sorte que le trajet de faisceau d'un faisceau lumineux réfléchi (14) est formé avec une intensité lumineuse, en particulier avec une réflectance,
c) détection du faisceau lumineux réfléchi (14) par un capteur de lumière (16) fixé sur le dispositif support, lequel capteur est disposé dans le trajet de faisceau du faisceau lumineux réfléchi (14),
d) analyse du signal de sortie du capteur lumineux (16), l'intensité lumineuse, en particulier la réflectance, du faisceau lumineux réfléchi (14) étant attribuée à une humidité de surface, et une modification de l'humidité de surface étant suivie par une modification de l'intensité lumineuse, en particulier de la réflectance, du faisceau lumineux réfléchi (14),
dans lequel l'angle de réflexion β correspondant à l'angle d'incidence α ou l'écart entre l'angle de réflexion β et l'angle d'incidence α n'étant pas supérieur à 15°,
la source lumineuse (2) étant une source lumineuse à impulsion avec une fréquence d'impulsion de 10 kHz à 70 kHz, et le capteur de lumière (16) et un dispositif de traitement des données associé au capteur de lumière (16) séparant le signal d'impulsion de signaux d'interférence continus,
la source lumineuse (2) émettant un rayonnement dans la gamme d'ondes de 820 nm à 1,5 µm,
et
dans lequel le capteur de lumière (16) comprenant au moins un filtre optique, afin, essentiellement, de filtrer complètement ou principalement la lumière du jour et/ou la lumière visible, et/ou
le capteur de lumière (16) étant ajusté sur la gamme de longueurs d'onde de la source lumineuse,
**caractérisé en ce que** l'angle de réflexion β et l'angle d'incidence α sont supérieurs à 48,6°, **en ce que** le capteur de lumière (16) comprend une rangée de photodiodes et/ou le capteur de lumière (16) est formé par plusieurs photodiodes sur une puce conjointement avec un circuit d'intégration et de lecture, et **en ce que** la distance sur et/ou dans le dispositif support entre la source lumineuse (2, 102, 202) et le capteur de lumière (16, 116, 216) est de 20 à 60 cm.

2. Procédé selon la revendication 1, **caractérisé en ce que** le capteur de lumière (16) et/ou le dispositif de traitement des données associé au capteur de lumière (16) séparent le signal d'impulsion de signaux d'interférence continus au moyen d'un filtre électronique.

3. Procédé selon la revendication 1 ou 2, **caractérisé en ce que** l'angle de réflexion β correspond à l'angle d'incidence α ou l'écart entre l'angle de réflexion β et l'angle d'incidence α n'est pas supérieur à 10°.

4. Procédé selon l'une des revendications précédentes, **caractérisé en ce que** l'angle de réflexion β et/ou l'angle d'incidence α sont supérieurs à 60°, de préférence supérieurs à 65°.

5. Procédé selon l'une des revendications précédentes, **caractérisé en ce que** la source lumineuse (2) émet un rayonnement dans la gamme d'ondes de 840 nm à 1,2 µm.

6. Procédé selon l'une des revendications précédentes, **caractérisé en ce que** les plusieurs photodiodes du capteur de lumière sont intégrées en rangée sur une puce, conjointement avec un circuit d'intégration et de lecture.

7. Dispositif de mesure pour la détermination de l'humidité de surface sur des façades de bâtiments (104, 204) en extérieur, comprenant
une source lumineuse (2, 102, 202) et un capteur de lumière (16, 116, 216) et un dispositif support (120, 220) pour la source lumineuse (2, 102, 202) et le capteur de lumière (16, 116, 216),
dans lequel la source lumineuse (2) étant une source de lumière à impulsion avec une fréquence d'impulsion de 10 kHz à 70 kHz, et le capteur de lumière (16) et/ou un dispositif de traitement des données associé avec le capteur de lumière (16) séparant le signal à impulsion de signaux d'interférence continus, et la source lumineuse (2) émettant un rayonnement dans la gamme d'ondes de 820 nm à 1,5 µm, et le capteur de lumière (16, 116, 216) comprenant au moins un filtre optique pour la lumière visible, **caractérisé en ce que**
la source lumineuse (2, 102, 202) est fixée sur un premier bras (130, 230) du dispositif support (120, 220) et le capteur de lumière (16, 116, 216) est fixé sur un deuxième bras (132, 232) du dispositif support,
**en ce que** la distance sur et/ou dans le dispositif support entre la source lumineuse (2, 102, 202) et le capteur de lumière (16, 116, 216) est de 20 à 60 cm,
**en ce que** le capteur de lumière (16) comprises une rangée de photodiodes et/ou le capteur de lumière (16) est formé par plusieurs photodiodes sur une puce conjointement avec un circuit d'intégration et de lecture,
**en ce que** le dispositif support (120, 220) peut être disposé sur une façade de bâtiment (104, 204) humide de telle sorte que le faisceau lumineux (6, 14) de la source lumineuse (2, 102, 202) est réfléchi par de l'eau, laquelle adhère à la façade de bâtiment (104, 204) et frappe le capteur de lumière (16, 116, 216) après une réflexion, **en ce que** l'angle de réflexion β correspond à l'angle d'incidence α ou l'écart entre l'angle de réflexion β et l'angle d'incidence α n'est pas supérieur à 15°, et
**en ce que** l'angle de réflexion β et l'angle d'incidence α sont supérieurs à 48,6°.

8. Dispositif de mesure selon la revendication 7, **caractérisé en ce que** la source lumineuse (2, 102, 202) émet un rayonnement dans la gamme de longueurs d'onde de 840 nm à 1,2 µm.

9. Dispositif de mesure selon la revendication 7 ou 8, **caractérisé en ce que** le capteur de lumière (16, 116, 216) comprend au moins un filtre électronique.

10. Dispositif de mesure selon l'une des revendications 7 à 9, **caractérisé en ce que** les plusieurs photodiodes du capteur de lumière sont intégrées en rangée sur une puce, conjointement avec un circuit d'intégration et de lecture.

11. Utilisation du dispositif de mesure selon l'une des revendications 7 à 10 pour la détermination de l'humidité de surface de la surface d'une façade de bâtiment, en particulier au moyen de la intensité lumineuse d'un faisceau lumineux réfléchi et/ou au moyen de sa réflectance, en particulier de lumière infrarouge, sur de l'eau et/ou pour la détermination du risque de contamination par des micro-organismes, des algues et/ou des moisissures.
